**Europäisches Patentamt**

**European Patent Office**

**Office européen des brevets**

(19)

(11) Veröffentlichungsnummer: **0 098 521**
**B1**

(12) **EUROPÄISCHE PATENTSCHRIFT**

(45) Veröffentlichungstag der Patentschrift:
**29.10.86**

(51) Int. Cl.⁴: **H 05 B 37/00**

(21) Anmeldenummer: **83106343.3**

(22) Anmeldetag: **29.06.83**

(54) **Verfahren und Vorrichtung zum automatischen Schalten einer Raumbeleuchtung.**

(30) Priorität: **06.07.82 DE 3225264**

(43) Veröffentlichungstag der Anmeldung:
**18.01.84 Patentblatt 84/3**

(45) Bekanntmachung des Hinweises auf die Patenterteilung:
**29.10.86 Patentblatt 86/44**

(84) Benannte Vertragsstaaten:
**AT BE CH DE FR GB IT LI NL SE**

(56) Entgegenhaltungen:
**DE - A - 1 490 471**
**DE - A - 2 841 696**
**FR - A - 901 661**
**FR - A - 2 449 994**
**US - A - 4 271 358**
**US - A - 4 318 089**
**US - A - 4 321 594**

(73) Patentinhaber: **Heimann GMBH, Weher Köppel 6,**
**D-6200 Wiesbaden 1 (DE)**

(72) Erfinder: **Huster, Horst, Thüringer Strasse 43,**
**D-6090 Rüsselsheim (DE)**
Erfinder: **Steinhage, Peter-Wilhelm, Dr. Dipl.-Phys.,**
**Brabanter Strasse 9, D-6200 Wiesbaden (DE)**
Erfinder: **Buchta, Hans-Peter, Schäfergasse 9,**
**D-6270 Idstein (DE)**

(74) Vertreter: **Mehl, Ernst, Dipl.-Ing. et al, Postfach 22 01 76,**
**D-8000 München 22 (DE)**

EP 0 098 521 B1

## Beschreibung

Die vorliegende Erfindung betrifft ein Verfahren zum automatischen Schalten einer Raumbeleuchtung in Abhängigkeit von der Anwesenheit einer sich bewegenden Person bei zu geringer vorhandener Beleuchtungsstärke.

In einem derartigen Verfahren wird in der bei Alarmanlagen bekannten Weise (US-A-4 321 594) die Körperstrahlung einer im Raum befindlichen Person von einem Infrarot-Detektor aufgenommen und zum Einschalten der Beleuchtung ausgewertet.

Daneben sind sogenannte Dimmer bekannt, welche eine Regelung der Beleuchtungsstärke von Hand ermöglichen. Ebenso sind Dämmerungsschalter bekannt, welche beim Unterschreiten einer festgelegten Mindesthelligkeit die Beleuchtung einschalten (DE-A-1 490 471).

Gegenüber diesen Einrichtungen liegt der vorliegenden Erfindung die Aufgabe zugrunde, Energie einzusparen, ohne dass die eintretende Person einen Schalter oder Regler betätigen muss. Diese Aufgabe wird dadurch gelöst, dass die Leuchtleistung der Raumbeleuchtung automatisch so eingestellt wird, dass eine gewünschte Gesamtbeleuchtungsstärke im Raum gerade erreicht wird.

Das erfindungsgemässe Verfahren hat einerseits die Vorteile, dass die Helligkeit stets den Bedürfnissen angepasst wird und dass die Beleuchtung bei ausreichender Helligkeit nicht eingeschaltet wird, wodurch erhebliche Energie eingespart wird, und andererseits den Vorteil, dass die Beleuchtung nur so lange eingeschaltet ist, wie sich eine Person in dem entsprechenden Raum befindet. Beispielsweise lastentragende Personen brauchen keine Dauerbeleuchtung einzuschalten, sie brauchen die Lasten nicht abzusetzen, sie haben stets die erforderliche Beleuchtung. Ausserdem macht das eingeschaltete Licht auf das Vorhandensein von Personen aufmerksam, ein Aufenthalt von Personen im Dunkeln, auch von unliebsamen Besuchern, ist praktisch ausgeschlossen. Diese Vorteile werden verstärkt dadurch erreicht, dass die Beleuchtung nur in den Teilen eines Raumes eingeschaltet wird, in denen sich die Person gerade befindet.

Hierzu dient vorteilhaft eine Vorrichtung gemäss dem Kennzeichen von Patentanspruch 3, welche eine Fokussiereinrichtung besitzt, die die Infrarot-Strahlung auf den Infrarot-Detektor fokussiert, und einen daneben angeordneten Lichtsensor. Der Lichtsensor kann dabei in unmittelbarer Nähe neben dem Infrarot-Detektor angeordnet sein, solange der Fokus des fokussierenden Elements den Lichtsensor nicht direkt trifft. Diese Anordnung genügt, um Verfälschungen durch die fokussierte Strahlung auszuschalten. Darüber hinaus ergeben die Ausführungsformen der Ansprüche 4 bis 7 neben einer guten Fokussierung der Infrarot-Strahlung eine Streuung des sichtbaren Lichts, so dass auf den Lichtsensor ein diffuses Licht auftrifft, welches der mittleren Raumausleuchtung entspricht. Dies tritt besonders vorteilhaft bei einer Polyäthylenfolie auf. Diese weist auch eine besonders gute Durchlässigkeit für die Infrarot-Strahlung im Wellenlängenbereich von 8 µm bis 14 µm auf.

Werden mehrere Fresnel-Linsen gebildet, deren Brennpunkte alle in einem gemeinsamen Brennpunkt zusammenfallen, wie in Anspruch 4 ausgedrückt, so lassen sich verschiedene Raumbereiche gleichzeitig überwachen. Je nach Lage dieser Raumbereiche zur erfindungsgemässen Vorrichtung ist eine zylinderförmige oder eine kugelförmige Anordnung der Fresnel-Linsen vorteilhaft. Diese Anordnungen können auch durch entsprechende vielflächige Gestaltungen angenähert werden. Wesentlich ist hierbei nur, dass die Brennpunkte der Fresnel-Linsen alle in der optisch wirksamen Fläche des Infrarot-Detektors zu liegen kommen.

Eine zusätzliche Färbung der Polyäthylenfolie ist ohne eine nennenswerte Verringerung der Durchlässigkeit für Infrarot-Strahlung möglich. Dadurch kann die spektrale Empfindlichkeit an die räumlichen Gegebenheiten angepasst werden.

Als fokussierende Elemente können auch Hohlspiegel eingesetzt werden. Als Lichtsensor empfiehlt sich insbesondere ein Photowiderstand, da dieser das Licht weitgehend unabhängig von dessen Herkunftsrichtung empfangen kann.

Durch die Ausführungsform gemäss Anspruch 10 ist es möglich, von einer mit mehreren Detektoren versehenen Vorrichtung aus mehrere Raumbereiche zu schalten und zu regeln. Dies ist vorteilhaft bei der Kreuzung zweier Gänge oder von Treppenhaus und Gang einzusetzen, wobei je nach der Marschrichtung der eintretenden Person jeweils der Vorplatz oder ein Gangteil erleuchtet werden kann. Gerade für solche Fälle reicht die Regelung der Lichtstärke durch nur einen Lichtsensor aus, da die zu erfassenden Abstände in der Richtung, nicht aber in der Entfernung von der Messstelle wesentliche Unterschiede zeigen.

Ein Vorteil aller beschriebenen Ausführungsformen ist, dass alle Bauteile des Gerätes, insbesondere der Infrarot-Detektor und der Lichtsensor, in nur einem Gehäuse untergebracht sein können.

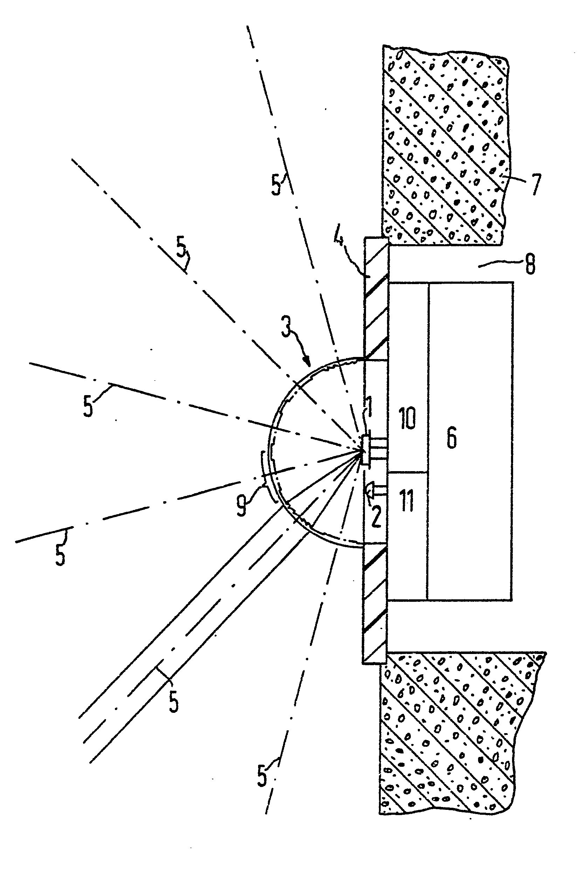

Die Erfindung wird nun anhand einer Figur näher erläutert. Sie ist nicht auf das in der Figur gezeigte Beispiel beschränkt.

Eine erfindungsgemässe Vorrichtung (schematisch dargestellt) enthält eine Auswertschaltung 6, die in einer Ausnehmung 8 einer Wand 7 untergebracht ist. Auf der Auswertschaltung 6 sind ein Infrarot-Detektor 1 und ein Photowiderstand 2 befestigt. Über dem Infrarot-Detektor 1 und dem Photowiderstand 2 wölbt sich eine für Infrarot-Strahlung und für sichtbares Licht durchlässige Folie 3, in welche sechs Fresnel-Linsen 9 eingeformt sind. Der Infrarot-Detektor 1 liegt auf der Achse des Zylinders bzw. dem Mittelpunkt der Kugel. Jede Fresnel-Linse 9 erfasst einen Sichtbereich 5 des umgebenden Raumes und ermöglicht die Anzeige einer Person, die sich in diesem Sichtbereich bewegt. Die Sichtbereiche liegen im Fall einer zylindrischen Ausbildung der Folie in einer Ebene, im Falle einer kugelförmigen Ausbildung können sie beliebige räumliche Lagen zueinander einnehmen. Eine Abdeckung 4 weist gerade die Höhe des Infrarot-Detektors 1 über der Auswerteschaltung 6 auf, so dass die an die Abdeckung 4 angrenzende Fresnel-Linse 9 in Lage und Grösse dieselben Bedingungen ergibt, wie die übrigen Fresnel-Linsen. Der Photowiderstand 2 ist in unmittelbarer Nähe des Infrarotdetektors 1, jedoch ausserhalb des Fokus der Fresnel-Linsen 9 angeordnet. Er empfängt die diffus durch die Folie hindurchtretende sichtbare Strahlung und misst somit die mittlere Leuchtdichte des die Vorrichtung umgebenden Raumes. Die Auswertschaltung 6 enthält je eine Steuerschaltung (10, 11) zum Ein- und Ausschalten und zur Regelung der Lichtleistung der Beleuchtung, um eine gewünschte Gesamtbeleuchtungsstärke gerade zu erreichen.

Vorzugsweise wird nur dann die Beleuchtung eingeschaltet, wenn sowohl der als Lichtsensor dienende Photowiderstand 2 eine ungenügende Raumausleuchtung anzeigt als auch der Infrarot-Detektor 1 eine sich bewegende Person meldet.

Durch Anbringen entsprechender Schalter kann entweder der Infrarot-Detektor oder der Lichtsensor ausgeschaltet und ein Betrieb des verbleibenden Sensors in an sich bekannter Weise ermöglicht werden. In diesem Fall verbleibt der Vorteil einer kostengünstigen, einfachen Konstruktion des Bewegungsmelders bzw. einer gleichmässigen, diffusen Strahlung auf den Lichtsensor.

Die Folie 3 besteht vorzugsweise aus Polyäthylen. Es eignen sich Polyäthylene der Niederdruckals auch der Hochdruckform. Dieses Material hat eine sehr hohe Durchlässigkeit in dem entsprechenden Infrarotbereich von 8 μm bis 14 μm. Es ist zusätzlich milchig trüb, so dass das sichtbare Licht in dem Material gestreut wird und damit der unter der Folie angeordnete Photowiderstand nur von diffusem Licht aus allen Richtungen getroffen wird, so dass er den integralen Beleuchtungszustand des Raumes einregelt.

Das Polyäthylenmaterial kann zusätzlich mit Farbträgern eingefärbt werden, beispielsweise um Farbeffekte der Wände und damit verbundene Verschiebungen der Empfindlichkeit auszugleichen. Solche Einfärbungen können ohne eine nennenswerte Reduzierung der Infrarot-Durchlässigkeit angebracht werden.

Der Infrarot-Detektor und der Lichtsensor können zu einem einzigen Bauelement zusammengefasst werden, da die Fresnel-Linsen eine ausreichend genaue Fokussierung ermöglichen. Als Lichtsensor eignet sich neben einem Photowiderstand auch ein Phototransistor oder eine Photodiode.

## Patentansprüche

1. Verfahren zum automatischen Schalten einer Raumbeleuchtung in Abhängigkeit von der Anwesenheit einer sich bewegenden Person bei zu geringer vorhandener Beleuchtungsstärke, dadurch gekennzeichnet, dass die Lichtleistung der Raumbeleuchtung automatisch so eingestellt wird, dass eine gewünschte Gesamtbeleuchtungsstärke im Raum gerade erreicht wird.

2. Verfahren nach Anspruch 1, dadurch gekennzeichnet, dass die Beleuchtung nur in den Teilen des Raumes eingeschaltet wird, in denen sich die Person gerade befindet.

3. Vorrichtung zur Durchführung des Verfahrens nach Anspruch 1, dadurch gekennzeichnet, dass in der Nähe eines Infrarot-Detektors (1) ein Lichtsensor (2) angeordnet ist und dass der Infrarot-Detektor (1) mit einer Steuerschaltung (10) zum Ein- bzw. Ausschalten und der Lichtsensor mit einer Steuerschaltung (11) für die Lichtleistung der Beleuchtung verschaltet ist.

4. Vorrichtung nach Anspruch 3, dadurch gekennzeichnet, dass sie ein fokussierendes Element enthält, welches die von der Person ausgehende Wärmestrahlung auf den Infrarot-Detektor (1) fokussiert, und dass der Lichtsensor ausserhalb des Fokusses liegt.

5. Vorrichtung nach Anspruch 4, dadurch gekennzeichnet, dass als fokussierendes Element eine für Infrarot-Strahlung mit einer Wellenlänge von 8 μm bis 14 μm durchlässige Fresnel-Linse eingesetzt ist, welche in einer lichtdurchlässigen und lichtstreuenden Folie gebildet ist, und dass im Brennpunkt dieser Fresnel-Linse der Infrarot-Detektor und ausserhalb des Fokus, doch hinter der Folie auch der Lichtsensor angeordnet ist.

6. Vorrichtung nach Anspruch 5, dadurch gekennzeichnet, dass mehrere Fresnel-Linsen in einer zylinderförmig oder kugelförmig gekrümmten Folie gebildet sind und so dimensioniert sind, dass die Brennpunkte aller Fresnel-Linsen in einem gemeinsamen Brennpunkt zusammenfallen und dass in dem gemeinsamen Brennpunkt der Infrarot-Detektor und ausserhalb des Fokusses, aber in unmittelbarer Nähe des Infrarot-Detektors der Lichtsensor angeordnet ist.

7. Vorrichtung nach einem der Ansprüche 5 oder 6, dadurch gekennzeichnet, dass die Fresnel-Linse in einer Polyäthylenfolie gebildet ist.

8. Vorrichtung nach Anspruch 7, dadurch gekennzeichnet, dass die Polyäthylenfolie mit Farbträgern zusätzlich gefärbt ist.

9. Vorrichtung nach Anspruch 4, dadurch gekennzeichnet, dass als fokussierendes Element ein Hohlspiegel dient.

10. Vorrichtung nach Anspruch 3, dadurch gekennzeichnet, dass sie zwei oder mehrere fokussierende Elemente und zwei oder mehrere Infrarot-Detektoren enthält und dass jeder Infrarot-Detektor auf eine Steuereinheit zum Ein- bzw. Aus-Schalten der Beleuchtung des Raumbereiches, in dem sich die Person gerade befindet, geschaltet ist.

## Claims

1. A method for automatic room light switching in dependence upon the presence of a moving person when the prevailing intensity of illumination is too low, characterised in that the light output of the room light is automatically adjusted to obtain a required overall intensity of illumination in the room.

2. A method as claimed in Claim 1, characterised in that the illumination is only switched on in the part of the room in which the person is currently present.

3. A device for implementing the method claimed in Claim 1, characterised in that a light sensor (2) is arranged in the vicinity of one infrared detector (1), and that the infrared detector (1) is interconnected with an on and off switching control circuit (10) and the light sensor is interconnected with a control circuit (11) for the illumination light output.

4. A device as claimed in Claim 3, characterised in that it comprises a focussing element which focusses the heat emanating from the person onto the infrared detector (1), and that the light sensor is arranged outside the focus.

5. A device as claimed in Claim 4, characterised in that a Fresnel lens transmissive to infrared radiation having a wave-length of 8 μm to 14 μm is used as a focussing element, which lens is formed in a light-transmissive and light-scattering foil, and that the infrared detector is arranged in the focal point of said Fresnel lens and the light sensor is arranged behind the foil but outside the focus.

6. A device as claimed in Claim 5, characterised in that a plurality of Fresnel lenses are formed in a part-cylindrical or part-spherical shaped foil dimensioned such that the focal points of all Fresnel lenses are combined in a common focal point, and that the infrared detector is arranged in the common focal point and the light sensor is arranged in the direct vicinity of the infrared detector, but outside the focus.

7. A device as claimed in one of Claims 5 or 6, characterised in that the Fresnel lens is formed in a polyethylene foil.

8. A device as claimed in Claim 7, characterised in that the polyethylene foil is additionally coloured with colour carriers.

9. A device as claimed in Claim 4, characterised in that a concave reflector serves as a focussing element.

10. A device as claimed in Claim 3, characterised in that it comprises one or more focussing elements and two or more infrared detectors and that each infrared detector is connected to a control unit for switching on or off the illumination of a respective area of the room, to light that area in which the person is currently present.

## Revendications

1. Procédé de branchement automatique de l'éclairage d'une pièce en fonction de la présence d'une personne se déplaçant alors que l'intensité d'éclairage existante est trop faible, caractérisé par le fait que la puissance lumineuse de l'éclairage de la pièce est réglée de façon automatique de manière qu'une intensité totale désirée d'éclairage est précisément atteinte dans la pièce.

2. Procédé suivant la revendication 1, caractérisé par le fait que l'éclairage n'est branché que dans les zones de la pièce, dans lesquelles la personne se situe précisément.

3. Dispositif pour la mise en œuvre du procédé suivant la revendication 1, caractérisé par le fait qu'un détecteur de lumière (2) est disposé à procimité d'un détecteur à infrarouge (1) et que le détecteur à infrarouge (1) est raccordé à un circuit de commande (10) utilisé pour le débranchement et le débranchement et que le détecteur de lumière est relié à un circuit (11) de commande de la puissance lumineuse de l'éclairage.

4. Dispositif suivant la revendication 3, caractérisé par le fait qu'il contient un élément de focalisation qui focalise le rayonnement thermique émanant de la personne sur le détecteur à infrarouge (2), et que le détecteur de lumière est situé en dehors du foyer.

5. Dispositif suivant la revendication 4, caractérisé par le fait qu'il est prévu, comme élément de focalisation, une lentille de Fresnel transparente pour le rayonnement infrarouge possédant une longueur d'onde comprise entre 8 μm et 14 μm et qui est formée dans une feuille transparente et diffusante pour la lumière, et que le détecteur à infrarouge est disposé au foyer de cette lentille de Fresnel et que, également, le détecteur de lumière est disposé en dehors du foyer, mais derrière la feuille.

6. Dispositif suivant la revendication 5, caractérisé par le fait que plusieurs lentilles de Fresnel sont formées dans une feuille cintrée avec une forme cylindrique ou sphérique et sont dimensionnées de telle sorte que les foyers de toutes les lentilles de Fresnel sont situés en un foyer commun et que le détecteur à infrarouge est disposé au niveau du foyer commun et que le détecteur de lumière est disposé en dehors du foyer, mais à proximité immédiate du détecteur à infrarouge.

7. Dispositif suivant l'une des revendications 5 ou 6, caractérisé par le fait que la lentille de Fresnel est formée dans une feuille de polyéthylène.

8. Dispositif suivant la revendication 7, caractérisé par le fait que la feuille de polyéthylène est en outre colorée par des chromophores.

9. Dispositif suivant la reventication 4, caractérisé par le fait qu'on utilise un miroir concave comme élément de focalisation.

10. Dispositif suivant la revendication 3, caractérisé par le fait qu'elle contient deux ou un plus grand nombre d'éléments de focalisation et deux ou un plus grand nombre de détecteurs à infrarouge et que chaque détecteur à infrarouge est raccordé à une unité de commande servant à brancher et à débrancher l'éclairage de la zone de la pièce, dans laquelle la personne se trouve précisément.